# EUROPEAN PATENT APPLICATION

(11) **EP 4 070 656 A1**
(43) Date of publication of application: **12.10.2022**
(21) Application number: 22166310.7
(22) Date of filing: 01.04.2022
(51) Int. Cl.: A01M 7/00

(54) **PEST CONTROL VEHICLE**

(30) Priority: 05.04.2021 JP 2021064432
(71) Applicant: Yanmar Holdings Co., Ltd., Osaka-shi, Osaka (JP)
(72) Inventor: WAKUTA, Kensaku, Okayama (JP); NAKAYAMA, Ai, Osaka (JP)
(74) Representative: Novagraaf International SA

(57) **Abstract**

[Problem] A pest control vehicle that can appropriately spray chemical liquid is provided.

[Solution] A pest control vehicle 1 includes crawler traveling portions 10, a chemical liquid tank 22, and cylindrical members 31. The chemical liquid tank 22 stores the chemical liquid for pest control. A space is formed inside the cylindrical member 31. The cylindrical member 31 includes a chemical liquid passage, chemical liquid injection portions 32, an air passage, and air injection portions 33. The chemical liquid flows through the chemical liquid passage. The chemical liquid injection portions 32 are connected to the chemical liquid passage and inject the chemical liquid. Air passes through the air passage. The air injection portions 33 are connected to the air passage and inject the air to support the chemical liquid to be sprayed.

## Description

### TECHNICAL FIELD

The present invention mainly relates to a pest control vehicle that sprays chemical liquid for pest control.

### BACKGROUND ART

Patent Document 1 discloses an agricultural vehicle including a chemical liquid tank and a nozzle unit. Chemical liquid for pest control is stored in the chemical liquid tank. A left and right pair of nozzle units are disposed on the agricultural vehicle. The chemical liquid of the chemical liquid tank is pumped to the nozzle units to be sprayed from the nozzle units.

### PRIOR ART DOCUMENT

### PATENT DOCUMENT

Patent Document 1: Japanese Patent Application Publication No. 2020-152285

### SUMMARY OF INVENTION

### TECHNICAL PROBLEM

With the configuration of Patent Document 1, the direction of the wind exerts an impact and a spraying distance to crop leaves is unstable, and thus the chemical liquid may be ununiformly sprayed. As a result, the chemical liquid cannot be appropriately sprayed.

The present invention is made in view of the above situations, and a main object of the present invention is to provide a pest control vehicle that can appropriately spray chemical liquid.

### SOLUTION TO PROBLEM

### ADVANTAGEOUS EFFECTS OF INVENTION

The problem to be solved by the present invention is as described above. Next, the means for solving the problem and the effects thereof will be described.

According to a first aspect of the present invention, a pest control vehicle configured as below is provided. In other words, the pest control vehicle includes traveling portions, a chemical liquid tank, and cylindrical members. The chemical liquid tank stores chemical liquid for pest control. A space is formed inside each of the cylindrical members. The cylindrical member includes a chemical liquid passage, chemical liquid injection portions, an air passage, and air injection portions. The chemical liquid flows through the chemical liquid passage. The chemical liquid injection portions are connected to the chemical liquid passage and inject the chemical liquid. Air flows through the air passage. The air injection portions are connected to the air passage and inject the air to support the chemical liquid to be sprayed.

Accordingly, the injection of the air supports the chemical liquid to be sprayed, and thus the chemical liquid can be appropriately sprayed. Additionally, since the cylindrical member includes the chemical liquid passage and the air passage, a compact structure can be realized.

According to a second aspect of the present invention, a pest control vehicle configured as below is provided. In other words, the pest control vehicle includes traveling portions, a chemical liquid tank, chemical liquid ducts, chemical liquid injection portions, air ducts, and air injection portions. The chemical liquid tank stores chemical liquid for pest control. The chemical liquid flows through the chemical liquid ducts. The chemical liquid injection portions are connected to the chemical liquid ducts and inject the chemical liquid. Air flows through the air ducts. The air injection portions are connected to the air ducts, and inject the air to support the chemical liquid to be sprayed.

Accordingly, the injection of the air supports the chemical liquid to be sprayed, and thus the chemical liquid can be appropriately sprayed.

In the pest control vehicle, the following configurations are preferably provided. In other words, a left and right pair of the air ducts are disposed at an interval. The chemical liquid duct to which the chemical liquid injection portions that inject the chemical liquid toward a left side are connected, and the chemical liquid duct to which the chemical liquid injection portions that inject the chemical liquid toward a right side are connected are disposed at the left air duct. The chemical liquid duct to which the chemical liquid injection portions that inject the chemical liquid toward the left side are connected, and the chemical liquid duct to which the chemical liquid injection portions that inject the chemical liquid toward the right side are connected are disposed at the right air duct.

Thus, the chemical liquid can be sprayed in four directions by traveling one time. Additionally, compared to a configuration in which the chemical liquid injection portions for the left side and the chemical liquid injection portions for the right side are attached to the single chemical liquid duct, a compact configuration can be provided.

In the pest control vehicle, the following configurations are preferably provided. In other words, the pest control vehicle includes a blower device that supplies the air to the air passage. The blower device is disposed above the air injection portions.

Thus, the blower device is disposed at a position that does not disturb spraying of the chemical liquid from the cylindrical member.

### BRIEF DESCRIPTION OF DRAWINGS

[FIG. 1] FIG. 1 is a perspective view of a pest control vehicle according to a first embodiment of the present invention.
[FIG. 2] FIG. 2 is a schematic back view illustrating a configuration of a back surface of the pest control vehicle.
[FIG. 3] FIG. 3 is a cross-sectional perspective view of a cylindrical member.
[FIG. 4] FIG. 4 is a perspective view of the pest control vehicle according to a second embodiment of the present invention.
[FIG. 5] FIG. 5 is a perspective view illustrating a configuration for changing a sprayed position of chemical liquid by a support member.
[FIG. 6] FIG. 6 is a schematic plan view illustrating a configuration of a contact detection mechanism attached to a left crawler.

### DESCRIPTION OF EMBODIMENTS

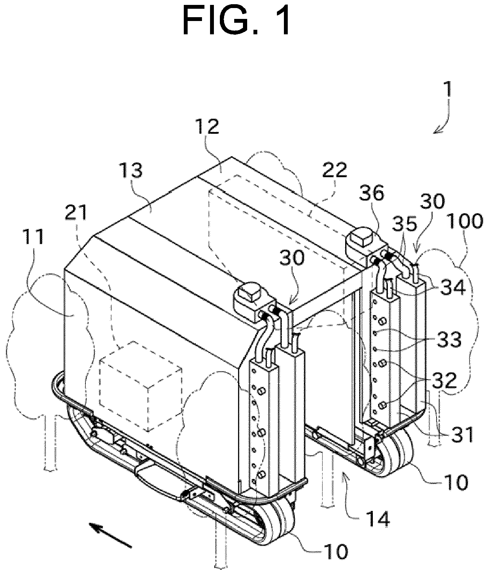

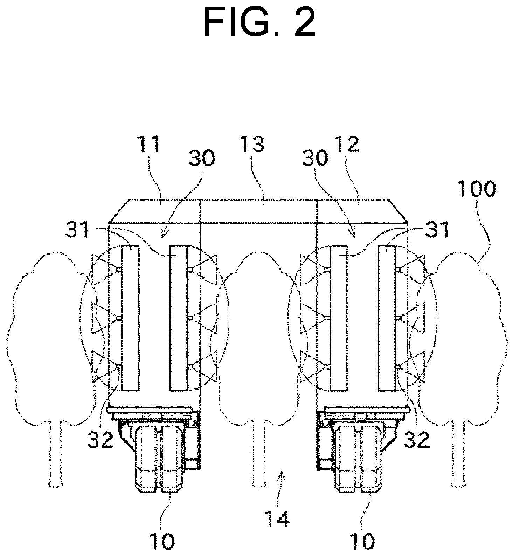

Next, embodiments of the present invention will be described with reference to the drawings. FIG. 1 is a perspective view of a pest control vehicle 1. FIG. 2 is a back view of the pest control vehicle 1. In the descriptions below, a direction in which the pest control vehicle 1 travels when spraying chemical liquid is determined as the front side, and the front, back, left, and right sides are defined. Accordingly, a vehicle width direction coincides with the left-right direction, and a vehicle length direction coincides with the front-back direction. In addition, a left and right pair (or front and back pair) of components disposed in the pest control vehicle 1 are designated with the same reference numbers, and descriptions thereof may be omitted or simplified.

The pest control vehicle 1 is a vehicle that sprays chemical liquid on plants 100 (spray target objects, work target objects) raised on a farm or the like. The plants 100 are, for example, orchard trees but may be vegetables. As illustrated in FIGS. 1 and 2, the pest control vehicle 1 includes crawler traveling portions 10, a left vehicle body 11, a right vehicle body 12, and an upper vehicle body 13.

The crawler traveling portions 10 are each a hydraulic type, and hydraulic oil is supplied to a hydraulic motor (not illustrated) to rotate a drive sprocket. Accordingly, crawlers wound on the drive sprockets, driving wheels, or the like rotate to allow the pest control vehicle 1 to travel. Further, by differentiating driving speeds of the left and right crawler traveling portions 10, the pest control vehicle 1 can turn. Furthermore, differentiating driving directions of the left and right crawler traveling portions 10, the pest control vehicle 1 can turn without changing the position.

The left vehicle body 11 is mainly supported by the left crawler traveling portion 10. The left vehicle body 11 includes a frame and a cover covering the frame. The right vehicle body 12 is mainly supported by the right crawler traveling portion 10. The right vehicle body 12 includes a frame and a cover covering the frame. Upper portions of the left vehicle body 11 and the right vehicle body 12 are connected by the upper vehicle body 13. Thus, a passage space 14 surrounded by the left vehicle body 11, the right vehicle body 12, and the upper vehicle body 13 is formed.

The passage space 14 is a space in which components are not disposed from the ground to a predetermined height and through which the plants 100 can pass when the pest control vehicle 1 travels. Thus, the left and right crawler traveling portions 10 travel while sandwiching the plants 100 in the left-right direction. In other words, the pest control vehicle 1 travels in the farm while straddling the plants 100.

An engine 21 is disposed in the left vehicle body 11. The engine 21 generates drive force to allow the pest control vehicle 1 to travel (power to operate a hydraulic motor). Note that the engine 21 may be disposed in the right vehicle body 12.

A chemical liquid tank 22 is disposed in the right vehicle body 12. Chemical liquid is stored in the chemical liquid tank 22. The chemical liquid stored in the chemical liquid tank 22 is medical agent having a function such as moth proofing, insect killing, or weeding. Note that the chemical liquid tank 22 may be disposed in the left vehicle body 11.

Additionally, injection units 30 are respectively disposed on back surfaces of the left vehicle body 11 and the right vehicle body 12. Each of the injection units 30 sprays the chemical liquid to both the left and right sides. Consequently, as illustrated in FIG. 2, the pest control vehicle 1 can simultaneously spray the chemical liquid on a right portion of the plant 100 on the left side of the pest control vehicle 1, both left and right portions of the plant 100 passing through the passage space 14, and a left portion of the plant 100 on the right side of the pest control vehicle 1. Note that the injection units 30 may be disposed front surfaces of the left vehicle body 11 and the right vehicle body 12. The configuration of the injection unit 30 will be described below in detail.

The pest control vehicle 1 is configured to autonomously travel in the farm. In other words, the pest control vehicle 1 detects its current position by using GNSS or the like. Additionally, an autonomous travel route is created in advance based on position information of the farm. With such a configuration, the pest control vehicle 1 sprays the chemical liquid on the plants 100 while autonomously traveling based on the current position and the autonomous travel route.

Note that the pest control vehicle 1 is not limited to a vehicle that autonomously travels. The pest control vehicle 1 may be, for example, a vehicle that travels by remote control. The remote control is referred to as control in which an operation by an operator located away from the pest control vehicle 1 (that is, an operator not riding on the pest control vehicle 1) allows the pest control vehicle 1 to travel or allows the pest control vehicle 1 to spray the chemical liquid.

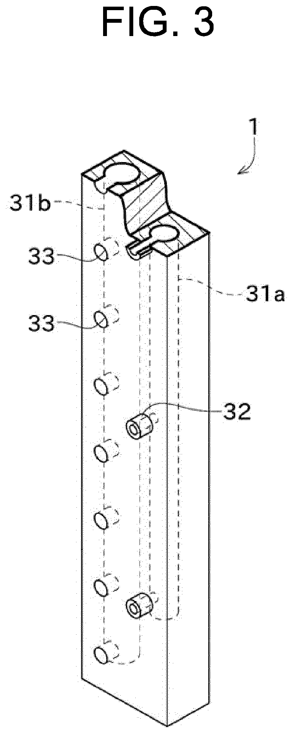

Next, the injection unit 30 will be described in detail with reference to FIGS. 1 to 3. FIG. 3 is a cross-sectional perspective view of a cylindrical member 31.

The left and right injection units 30 are configured in the same manner or are configured symmetrically with respect to a plane passing through the center in the vehicle width direction. Therefore, the left and right injection units 30 will be summarized and described below. As illustrated in FIGS. 1 and 2, the injection unit 30 includes two cylindrical members 31 disposed side by side on the left side and the right side. In other words, in the present embodiment, since two cylindrical members 31 are disposed on the left side and two cylindrical members 31 are disposed on the right side, a total of four cylindrical members 31 are disposed.

The cylindrical member 31 is disposed to extend in the up-down direction. In other words, the cylindrical member 31 is an elongated member, and is disposed such that its longitudinal direction substantially coincides with the up-down direction (vehicle height direction). Note that, for example, even when the longitudinal direction of the cylindrical member 31 is deviated from the up-down direction by few angles, the longitudinal direction of the cylindrical member 31 is defined to substantially coincide with the up-down direction (that is, the cylindrical member 31 extends in the up-down direction).

The cylindrical member 31 is formed in a cylinder, and a space is formed inside. The cylindrical member 31 is made of resin and is integrally molded with a mold. Note that the cylindrical member 31 may be made of a material other than resin. As illustrated in FIG. 3, a chemical liquid passage 31a and an air passage 31b are formed inside the cylindrical member 31.

The chemical liquid passage 31a is a space through which the chemical liquid passes. The chemical liquid passage 31a is a passage extending in the up-down direction. A chemical liquid hose 34 is connected to the chemical liquid passage 31a. Specifically, an upper end of the chemical liquid passage 31a is opened. The chemical liquid passage 31a is configured such that a coupler of the chemical liquid hose 34 is connectable to the upper end. The chemical liquid hose 34 is connected to the chemical liquid tank 22. Additionally, a pump (not illustrated) is disposed in a pathway that connects the chemical liquid passage 31a to the chemical liquid tank 22. The chemical liquid in the chemical liquid tank 22 is pumped to the chemical liquid passage 31a. Note that a pathway of the chemical liquid hose 34 may be disposed in any manner but is preferably disposed so as not to pass through the passage space 14. In other words, the chemical liquid hose 34 connected to the left chemical liquid passage 31a is preferably connected through the upper vehicle body 13 to the chemical liquid tank 22.

A plurality of chemical liquid injection portions 32 are disposed on the cylindrical member 31. The chemical liquid injection portions 32 are each a nozzle from which the chemical liquid is injected. The chemical liquid injection portions 32 are disposed side by side in the up-down direction. The chemical liquid injection portions 32 are disposed in a direction enabling the aforementioned chemical liquid to be sprayed. Specifically, on a left and right pair of cylindrical members 31 disposed on the left vehicle body 11, the chemical liquid injection portions 32 are disposed on a left surface of the left cylindrical member 31, and the chemical liquid injection portions 32 are disposed on a right surface of the right cylindrical member 31. The same applies to the right vehicle body 12.

The air passage 31b is a space through which air (particularly, compressed air) for supporting the chemical liquid to be sprayed passes. The air passage 31b is a passage extending in the up-down direction. The air passage 31b and the chemical liquid passage 31a are formed at positions aligned in the front-back direction. Specifically, the air passage 31b is formed on the front side of the chemical liquid passage 31a (in other words, at a near side of the vehicle body with respect to the chemical liquid passage 31a). Note that the air passage 31b may be formed on the back side of the chemical liquid passage 31a (in other words, at a far side of the vehicle body with respect to the chemical liquid passage 31a).

A blower hose 35 is connected to the air passage 31b. Specifically, an upper end of the air passage 31b is opened. The air passage 31b is configured such that a coupler of the blower hose 35 is connectable to the upper end. The blower hose 35 is connected to a blower device 36. In the present embodiment, a portion of the blower hose 35 is a flexible hose that is extendable. Thus, in a case where the position or the like of the cylindrical member 31 is adjusted or in a case where rattling or the like occurs, countermeasures can be taken.

The blower device 36 sucks air in or sends the air to generate compressed air and send the compressed air. The blower device 36 is disposed on the level higher than the cylindrical member 31. One blower device 36 is disposed on the left vehicle body 11 and one blower device 36 is disposed on the right vehicle body, and thus a total of two blower devices 36 are disposed. The blower device 36 is disposed such that a portion is exposed from the vehicle body to suck outside air in. In the present embodiment, the single blower device 36 supplies air to the two cylindrical members 31; however, the blower device 36 may be disposed for each of the cylindrical members 31. Note that pathways of the chemical liquid hose 34 and the blower hose 35 partially overlap and thus the chemical liquid hose 34 and the blower hose 35 may be bundled with a binder such as a band. The air sent from the blower device 36 is supplied through the blower hose 35 to the air passage 31b.

A plurality of air injection portions 33 are disposed in the cylindrical member 31. The air injection portions 33 are each a hole through which air is injected. Note that the air injection portion 33 may be a nozzle. The air injection portions 33 are disposed side by side in the up-down direction. The air injection portions 33 are formed on the same side of the left and right surfaces of the cylindrical member 31 as the chemical liquid injection portions 32 are formed. Spraying of the chemical liquid is supported by the air injected from the air injection portions 33. Specifically, the chemical liquid is splashed by the air, and thus the chemical liquid can be uniformly applied. In particular, in the case of spraying the chemical liquid on leaves of the plants 100, the leaves sway with the air; therefore, the chemical liquid can be sprayed uniformly on the front and back of the leaves. Additionally, the air to be injected is increased, and thus a distance in which the chemical liquid is sprayed can be increased.

In the present embodiment, the number of air injection portions 33 disposed in the single cylindrical member 31 is greater than the number of chemical liquid injection portions 32 disposed in the single cylindrical member 31. Thus, the chemical liquid can be uniformly sprayed while the number of chemical liquid injection portions 32 is suppressed. Note that the number of chemical liquid injection portion 32 may be equal to the number of air injection portions 33 or the number of chemical liquid injection portion 32 may be greater than the number of air injection portions 33.

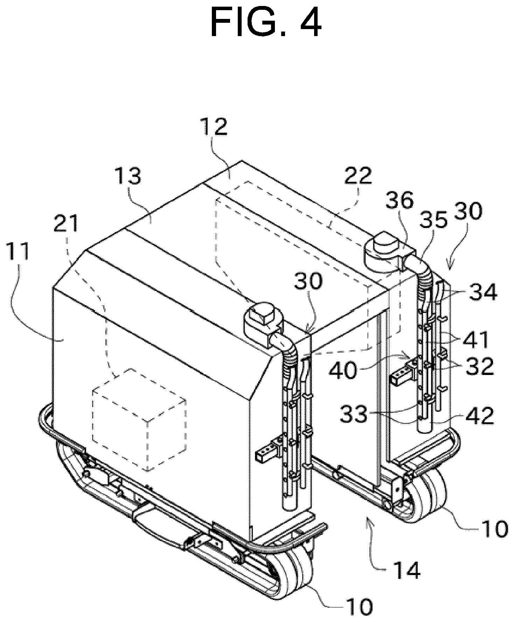

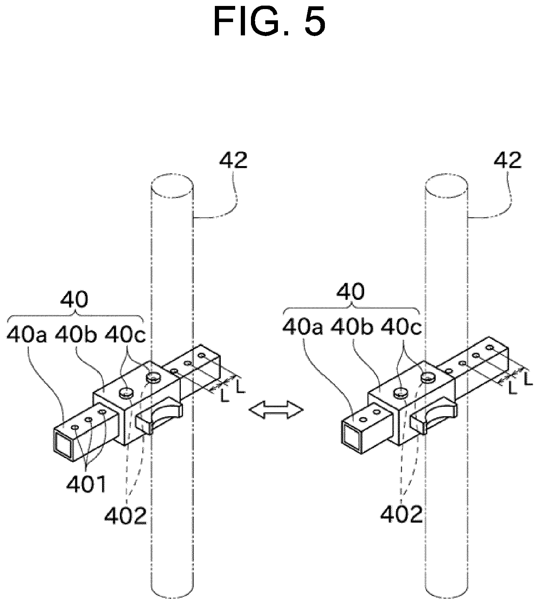

Next, a second embodiment of the present invention will be described with reference to FIGS. 4 and 5. FIG. 4 is a perspective view of the pest control vehicle 1 according to the second embodiment. FIG. 5 is a perspective view illustrating a configuration for changing a sprayed position of the chemical liquid by a support member 40. Note that in the following descriptions, a member that is the same as or similar to that in the aforementioned embodiment is designated with the same reference number, and the description thereof may be omitted.

In the first embodiment, the chemical liquid and the air pass through the cylindrical member 31. In contrast, the chemical liquid and the air pass through different members in the second embodiment. Specifically, the injection unit 30 of the second embodiment includes chemical liquid ducts 41 and an air duct 42 instead of the cylindrical members 31.

The chemical liquid ducts 41 each include a function similar to that of the chemical liquid passage 31a. Therefore, the chemical liquid hose 34 is connected to the chemical liquid duct 41, and the chemical liquid in the chemical liquid tank 22 is supplied to the chemical liquid duct 41. Further, the chemical liquid injection portions 32 are disposed on the chemical liquid duct 41, and the chemical liquid is injected.

The air duct 42 includes a function similar to that of the air passage 31b. Therefore, the blower hose 35 is connected to the air duct 42, and the air sent from the blower device 36 is supplied to the air duct 42. Furthermore, the air injection portions 33 are disposed on the air duct 42, and the air is injected.

Here, in the second embodiment, the single air duct 42 supports the air to be sprayed by the two chemical liquid ducts 41. Specifically, the single air duct 42 is disposed on each of the left vehicle body 11 and the right vehicle body 12. A left and right pair of chemical liquid ducts 41 are disposed on the air duct 42. Additionally, the air injection portions 33 are formed on both left and right sides of the air duct 42. As described above, spraying of the chemical liquid by the two chemical liquid ducts 41 can be supported with the use of the single air duct 42.

Moreover, in the second embodiment, sprayed positions in the left-right direction of the chemical liquid can be changed. Specifically, as illustrated in FIG. 5, the air duct 42 is attached via the support member 40 to the left vehicle body 11 or the right vehicle body 12. The support member 40 includes a base portion 40a, a slide portion 40b, and fixation members 40c.

The base portion 40a is fixed to the left vehicle body 11 or the right vehicle body 12. The slide portion 40b is configured to be slidable in the left-right direction to the base portion 40a. The air duct 42 is fixed to the slide portion 40b so as not to move relative thereto. As described above, the chemical liquid ducts 41 are fixed to the air duct 42.

Attachment holes 401 are formed side by side in the left-right direction and at predetermined intervals L in the base portion 40a. Attachment holes 402 are formed in the slide portion 40b at the same intervals L or at intervals, each of which is integral multiple of L. With the configuration described above, the slide portion 40b is slid in the left-right direction to the base portion 40a to be mounted at a desired position, thereafter being fixed to the base portion 40a by the fixation members 40c with the attachment holes 401 of the base portion 40a aligned with the attachment holes 402 of the slide portion 40b. As described above, the position in the left-right direction of the air duct 42 (simultaneously, the position in the left-right direction of the chemical liquid ducts 41) can be changed.

The features of the first embodiment and the second embodiment can be combined. For example, the configuration of the second embodiment allowing the position in the left-right direction to be adjusted can be applied to the first embodiment.

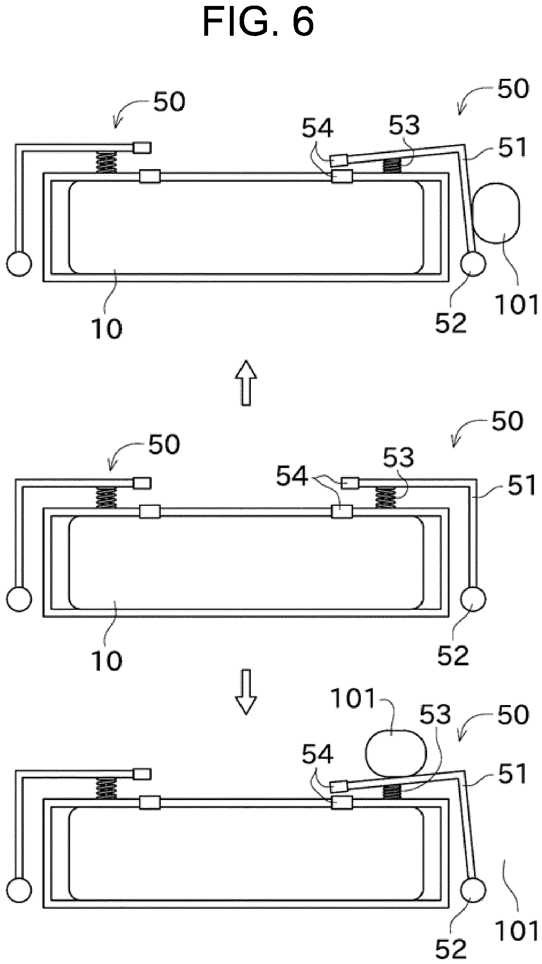

The pest control vehicle 1 of the first embodiment and the second embodiment includes a contact detection mechanism 50 illustrated in FIG. 6. FIG. 6 is a schematic plan view illustrating a configuration of the contact detection mechanism 50 attached to the left crawler traveling portion 10.

Typically, in a case where contacts of obstacles or the like are detected in four directions of the front, back, left, and right sides, contact type sensors are installed on the front, back, left, and right sides. However, when being damaged by strong contact with an obstacle or the like, the contact type sensor needs to be replaced. In particular, this type of contact type sensor tends to be an expensive product, which leads to an increase of costs for replacement.

For such a circumstance, the contact detection mechanism 50 that detects a contact of an obstacle or the like by using magnet switches 54 as non-contact type sensors is provided in the present embodiment. Specifically, the contact detection mechanism 50 includes a contact bar 51, a rotary shaft portion 52, a spring 53, and the magnet switches 54.

The contact bar 51 is formed in an L-shape. The contact bars 51 are disposed to cover two sides (for example, the front and left sides) of the crawler traveling portion 10 in a plan view. The contact bar 51 is configured to be rotatable about the rotary shaft portion 52 at one end of the contact bar 51. Further, in order to prevent the contact bar 51 from coming into contact with the crawler traveling portion 10 due to the rotation of the contact bar 51, the contact bar 51 is connected via the spring 53 to the crawler traveling portion 10. Furthermore, the magnet switches 54 are respectively disposed at the other end of the contact bar 51 and the crawler traveling portion 10.

With the configuration described above, as illustrated in FIG. 6, even when the contact bar 51 comes into contact in any of two directions, the contact bar 51 rotates in the same direction. As a result, the positions of the two magnet switches 54 come close, and thus a contact can be detected. As just described, in the present embodiment, the non-contact type sensors, the frequency of replacement of which is low are used, and the single sensor can detect contacts in the two directions. Therefore, a contact with an obstacle 101 in four directions can be detected.

The pest control vehicle 1 of the present embodiment includes the crawler traveling portions 10, the chemical liquid tank 22, and the cylindrical members 31. The chemical liquid tank 22 stores the chemical liquid for pest control. A space is formed inside the cylindrical member 31. The cylindrical member 31 includes the chemical liquid passage 31a, the chemical liquid injection portions 32, the air passage 31b, and the air injection portions 33. The chemical liquid flows through the chemical liquid passage 31a. The chemical liquid injection portions 32 are connected to the chemical liquid passage 31a, and inject the chemical liquid. The air flows through the air passage 31b. The air injection portions 33 are connected to the air passage 31b, and inject the air and thus support the chemical liquid to be sprayed.

Accordingly, the injection of the air supports the chemical liquid to be sprayed, and thus the chemical liquid can be appropriately sprayed. Additionally, since the cylindrical member includes the chemical liquid passage and the air passage, a compact structure can be realized.

The pest control vehicle 1 of the present embodiment includes the crawler traveling portions 10, the chemical liquid tank 22, the chemical liquid ducts 41, the chemical liquid injection portions 32, the air ducts 42, and the air injection portions 33. The chemical liquid tank 22 stores the chemical liquid for pest control. The chemical liquid flows through the chemical liquid duct 41. The chemical liquid injection portions 32 are connected to the chemical liquid duct 41, and inject the chemical liquid. The air flows through the air duct 42. The air injection portions 33 are connected to the air duct, and inject the air and thus support the chemical liquid to be sprayed.

Accordingly, the injection of the air supports the chemical liquid to be sprayed, and thus the chemical liquid can be appropriately sprayed.

In the pest control vehicle 1 of the present embodiment, the left and right pairs of air ducts 42 are disposed at the interval L. The chemical liquid duct 41 to which the chemical liquid injection portions 32 that spray the chemical liquid toward the left side are connected, and the chemical liquid duct 41 to which the chemical liquid injection portions 32 that spray the chemical liquid toward the right side are connected are disposed on the left air duct 42. The chemical liquid duct 41 to which the chemical liquid injection portions 32 that spray the chemical liquid toward the left side are connected, and the chemical liquid duct 41 to which the chemical liquid injection portions 32 that spray the chemical liquid toward the right side are connected are disposed on the right air duct 42.

Thus, the chemical liquid can be sprayed in four directions by traveling one time. Additionally, compared to a configuration in which the chemical liquid injection portions for the left side and the chemical liquid injection portions for the right side are attached to the single chemical liquid duct, a compact configuration can be provided.

The pest control vehicle 1 of the present embodiment includes the blower device 36 that supplies the air to the air passage 31b. The blower device 36 is disposed above the air injection portions 33.

Thus, the blower device 36 is disposed at a position that does not disturb spraying of the chemical liquid from the cylindrical members 31.

The present embodiments of the present inventions are described as above; however, the aforementioned configuration can be changed as follows.

In the aforementioned embodiment, the left and right pair of cylindrical members 31 are disposed on the left vehicle body 11; however, the single cylindrical member 31 may be disposed on the left vehicle body 11. In this case, the single cylindrical member 31 is configured to inject the chemical liquid toward the left and right sides.

The pest control vehicle 1 of the aforementioned embodiment travels with the crawlers but may travel with driving wheels.

### REFERENCE SIGNS LIST

1: pest control vehicle
10: crawler traveling portion (traveling portion)
11: left vehicle body
12: right vehicle body
13: upper vehicle body
14: passage space
21: engine
22: chemical liquid tank
31: cylindrical member
31a: chemical liquid passage
31b: air passage
32: chemical liquid injection portion
33: air injection portion
34: chemical liquid hose
35: blower hose
36: blower device
41: chemical liquid duct
42: single air duct

## Claims

1. A pest control vehicle, comprising:
traveling portions;
a chemical liquid tank that stores chemical liquid for pest control; and
cylindrical members in each of which a space is formed,
the cylindrical member comprising:
a chemical liquid passage through which the chemical liquid flows;
chemical liquid injection portions connected to the chemical liquid passage and injecting the chemical liquid;
an air passage through which air flows; and
air injection portions connected to the air passage and injecting the air to support the chemical liquid to be sprayed.

2. A pest control vehicle, comprising:
traveling portions;
a chemical liquid tank that stores chemical liquid for pest control;
chemical liquid ducts through which the chemical liquid flows;
chemical liquid injection portions connected to the chemical liquid ducts and injecting the chemical liquid;
air ducts through which air flows; and
air injection portions connected to the air ducts and injecting the air to support the chemical liquid to be sprayed.

3. The pest control vehicle according to claim 2, wherein
a left and right pair of the air ducts are disposed at an interval,
the chemical liquid duct to which the chemical liquid injection portions that inject the chemical liquid toward a left side are connected, and the chemical liquid duct to which the chemical liquid injection portions that inject the chemical liquid toward a right side are connected are disposed at the left air duct, and
the chemical liquid duct to which the chemical liquid injection portions that inject the chemical liquid toward the left side are connected, and the chemical liquid duct to which the chemical liquid injection portions that inject the chemical liquid toward the right side are connected are disposed at the right air duct.

4. The pest control vehicle according to any one of claims 1 to 3, comprising a blower device that supplies the air injected from the air injection portions, wherein
the blower device is disposed above the air injection portions.
